# EUROPEAN PATENT APPLICATION

(11) **EP 4 197 874 A1**
(43) Date of publication of application: **21.06.2023**
(21) Application number: 21855096.0
(22) Date of filing: 26.03.2021
(51) Int. Cl.: B60W 50/08

(54) **SCENE GENERATION METHOD, APPARATUS AND SYSTEM, DEVICE AND STORAGE MEDIUM**

(30) Priority: 12.08.2020 CN 202010808807
(71) Applicant: Human Horizons (Shanghai) Cloud Computing Technology Co., Ltd., Shanghai 201114 (CN)
(72) Inventor: DING, Lei, Shanghai 201114 (CN); WANG, Pengrui, Shanghai 201114 (CN); ZHANG, Junzhe, Shanghai 201114 (CN); NAN, Run, Shanghai 201114 (CN)
(74) Representative: Bittner, Bernhard
(86) International application number: PCT/CN2021/083160
(87) International publication number: WO 2022/033040

(57) **Abstract**

A scene generation method, comprising: controlling, according to an execution request for a target scene, a vehicle to enter a safety preparation state for implementing the target scene (S101); analyzing a script of the target scene, to generate a scene execution strategy for a respective scene execution component of the vehicle (S102), wherein the scene execution strategy includes an execution function and execution time information of the respective scene execution component; and triggering the respective scene execution component to work according to the scene execution strategy, to generate the target scene (S103). A scene generation apparatus, system and device as well as a storage medium are disclosed. According to the method, under the condition of ensuring safety and controllability of the vehicle, more diverse scenes are provided to a user on the vehicle side, and the entertainment and application experience of the vehicle are improved.

## Description

The present application claims priority to Chinese Patent Application No. 202010808807.3, filed with the Chinese Patent Office on August 12, 2020 and entitled "SCENE GENERATION METHOD, APPARATUS AND SYSTEM, DEVICE AND STORAGE MEDIUM", which is incorporated herein by reference in its entirety.

### TECHNICAL FIELD

The present application relates to the field of intelligent vehicle technology, and in particular to a scene generation method, a scene generation apparatus, a scene generation system, a scene generation device and a storage medium.

### BACKGROUND

Multiple output devices such as a display screen, an ambient light, a seat, an audio, an air conditioner, etc. are provided on a vehicle. These output devices usually perform a certain function alone, but cannot cooperate with each other to realize a certain scene.

### SUMMARY

The embodiments of the present application provide a scene generation method, a scene generation apparatus, a scene generation system, a scene generation device and a storage medium, to solve the problems existing in the relevant art. The technical solutions are as follows.

In a first aspect, an embodiment of the present application provides a scene generation method, applied to an in-vehicle scene APP, and the method includes: controlling, according to an execution request for a target scene, a vehicle to enter a safety preparation state for implementing the target scene; analyzing a script of the target scene, to generate a scene execution strategy for a respective scene execution component of the vehicle, wherein the scene execution strategy includes an execution function and execution time information of the respective scene execution component; and triggering the respective scene execution component to work according to the scene execution strategy, to generate the target scene.

In a second aspect, an embodiment of the present application provides a scene generation method, applied to an audiovisual domain controller, and the method includes: receiving a safety control request sent by an in-vehicle scene APP, wherein the safety control request is configured for requesting a vehicle to enter a safety preparation state for implementing a target scene; generating a corresponding safety service request according to the safety control request; and converting the safety service request into a first SOA gateway signal, and sending the first SOA gateway signal to a corresponding safety domain controller, wherein the first SOA gateway signal is configured for causing the safety domain controller to convert it into a safety control instruction and send the safety control instruction to a corresponding safety execution component, to control the respective safety execution component to enter a corresponding safety preparation state.

In a third aspect, an embodiment of the present application provides a scene generation method, applied to a safety domain controller, and the method includes: receiving a first SOA gateway signal sent by an audiovisual domain controller; converting the first SOA gateway signal into a corresponding safety control instruction; sending each safety control instruction to a corresponding safety execution component, to control the respective safety execution component to enter a corresponding safety preparation state.

In a fourth aspect, an embodiment of the present application provides a scene generation system which includes: an audiovisual domain controller, wherein an in-vehicle scene APP is installed on the audiovisual domain controller, and the in-vehicle scene APP is configured for performing the method of the foregoing first aspect, and the audiovisual domain controller is configured for performing the method of the foregoing second aspect; a safety domain controller, communicatively connected to the audiovisual domain controller, wherein the safety domain controller is configured for performing the method of the foregoing third aspect; a safety execution component, communicatively connected to the safety domain controller, which is configured for entering a corresponding safety preparation state according to a safety control instruction of the safety domain controller; a scene execution domain controller, communicatively connected to the audiovisual domain controller, which is configured for converting a second SOA gateway signal sent by the audiovisual domain controller into a function execution control instruction, and sending the function execution control instruction to a corresponding scene execution component; and the scene execution component, communicatively connected to the safety domain controller, which is configured for working according to the function execution control instruction of the safety domain controller.

In a fifth aspect, an embodiment of the present application provides a scene generation apparatus which includes: a controlling module, which is configured for controlling, according to an execution request for a target scene, a vehicle to enter a safety preparation state for implementing the target scene; an analyzing module, which is configured for analyzing a script of the target scene, to generate a scene execution strategy for a respective scene execution component of the vehicle, wherein the scene execution strategy includes an execution function and execution time information of the respective scene execution component; and a triggering module, which is configured for triggering the respective scene execution component to work according to the scene execution strategy, to generate the target scene.

In a sixth aspect, an embodiment of the present application provides a scene generation device which includes: at least one processor; and a memory communicatively connected to the at least one processor; wherein instructions enable to be executed by the at least one processor is stored in the memory, and the instructions, when executed by the at least one processor, cause the at least one processor to perform the scene generation method of the embodiments of the present application.

In a seventh aspect, an embodiment of the present application provides a computer-readable storage medium, and the computer-readable storage medium stores computer instructions which, when executed by a processor, implement the scene generation method of the embodiments of the present application.

Advantages or beneficial effects of the foregoing technical solutions at least include: under the condition of ensuring safety and controllability of the vehicle, more diverse scenes are provided to a user on the vehicle side, and the entertainment and application experience of the vehicle are improved.

The above summary is only intended for description purpose, not for limiting in any manner. In addition to the illustrative aspects, implementations and features described above, further aspects, implementations and features of the present application are made more apparent with reference to the drawings and the following detailed depictions.

### BRIEF DESCRIPTION OF THE DRAWINGS

In the drawings, the same reference numbers throughout multiple drawings denote the same or similar members or elements unless otherwise specified. These drawings are not necessarily drawn to scale. It should be understood that these drawings only depict some embodiments of the present application and should not be construed as limiting the scope of the present application.
FIG. 1 illustrates a flow chart of a scene generation method according to an implementation of an embodiment of the present application;
FIG. 2 is a schematic diagram of an application example of a scene generation method according to an embodiment of the present application;
FIG. 3 illustrates a flow chart of a scene generation method according to another implementation of an embodiment of the present application;
FIG. 4-1 is an exemplary diagram of a method of controlling a vehicle to enter a safety preparation state;
FIG. 4-2 is an exemplary diagram of a method of triggering a scene execution component to work;
FIG. 5 is an exemplary application diagram of realizing a scene generation system of an embodiment of the present application;
FIG. 6 is a schematic diagram of an example of a scene execution component according to an embodiment of the present application;
FIG. 7 is a schematic diagram of another example of a scene execution component according to an embodiment of the present application;
FIG. 8 is an exemplary diagram of vehicle light settings;
FIG. 9 is an effect diagram of triggering a projection light to project;
FIG. 10 is an effect diagram of triggering a ISD screen to display;
FIG. 11 is an exemplary application diagram of an in-vehicle scene APP which realizes a scene generation method of an embodiment of the present application;
FIG. 12 is a schematic diagram of a scene generation apparatus according to an embodiment of the present application; and
FIG. 13 is a schematic diagram of a scene generation device according to an embodiment of the present application.

### DETAILED DESCRIPTION

Only some exemplary embodiments are briefly described below. As a person skilled in the art may realize, the described embodiments may be modified in various different ways without departing from the spirit or scope of the present application. Therefore, the drawings and description are regarded as illustrative and not restrictive in nature.

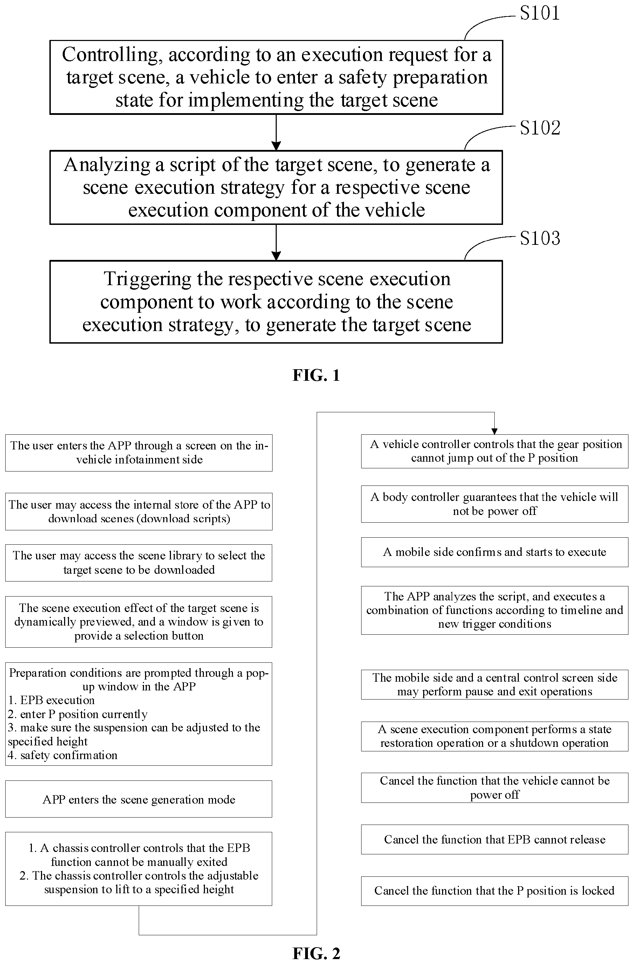

FIG. 1 illustrates a flow chart of a scene generation method according to an embodiment of the present application. The scene generation method may be applied to an in-vehicle scene APP (Application).

As shown in FIG. 1, the scene generation method may include following steps.

At step S 101, controlling, according to an execution request for a target scene, a vehicle to enter a safety preparation state for implementing the target scene.

The target scene may be a scene selected by a user, that is, the user may select the target scene based on the in-vehicle scene APP, and then the execution request for the target scene is triggered. The in-vehicle scene APP may adjust the state of the vehicle according to the execution request, and control the vehicle to enter the safety preparation state for implementing the target scene, thereby putting the vehicle in a safety state for realizing the target scene.

In an implementation, controlling the vehicle to enter the safety preparation state for implementing the target scene may include: controlling an electrical park brake (EPB) system to execute a parking function; and/or controlling a suspension to lift to a preset height; and/or controlling a gear position of the vehicle to be a park position, and controlling the gear position of the vehicle to be in a non-switchable state; and/or determining that the vehicle is in a state of not being power off.

EPB measures a slope by a longitudinal acceleration sensor built in its computer so that a sliding force of the vehicle on the slope generated due to gravity may be calculated. The computer applies braking force to rear wheels by a motor to balance the sliding force so that the vehicle may park on the slope, and then in the process of the vehicle realizing the target scene, it can be ensured that unsafe factors such as vehicle slipping, etc. may not appear. By setting the gear position of the vehicle to the park position, a risk of accidents caused by negligently switching to other gear positions in the process of realizing the target scene is avoided. The state of not being power off may guarantee that sufficient electric power can be provided in the process of the vehicle realizing the target scene.

At step S102, analyzing a script of the target scene, to generate a scene execution strategy for a respective scene execution component of the vehicle, wherein the scene execution strategy includes an execution function and execution time information of the respective scene execution component.

Scripts of multiple scenes may be stored in a cloud library, and these scripts may be preset by a programmer in the cloud library and may be set by any user according to actual needs in the process of using. The cloud library may be a vehicle TSP (Telematics Service Provider) cloud library. The cloud library may automatically push the script of a scene to each vehicle, and the user may also select a scene by a terminal APP, so that the script corresponding to the scene may be download to the vehicle. The terminal includes but not limited to a mobile phone, a personal computer, a tablet personal computer, etc. Terminal APPs such as a mobile phone APP, a personal computer APP, a tablet personal computer APP, etc. may connect to the in-vehicle scene APP through wide area network so that when the user selects a scene by the terminal APPs such as a mobile phone APP, a personal computer APP, a tablet personal computer APP, etc., the script of the scene may be downloaded to the in-vehicle scene APP on an in-vehicle infotainment side. In an example, as shown in FIG. 2, the user may access the in-vehicle scene APP through a screen on the in-vehicle infotainment side and download a scene from the internal store of the in-vehicle scene APP, that is, download the script corresponding to the scene.

The downloaded scene is stored in a scene library, and the user may select the target scene based on a terminal APP or in-vehicle scene APP.

The in-vehicle scene APP may obtain, by analyzing the script of the target scene, the scene execution strategy for each scene execution component such as the execution function for each scene execution component combined by timeline and trigger conditions.

At step S 103, triggering the respective scene execution component to work according to the scene execution strategy, to generate the target scene. For example, the respective scene execution components are controlled to perform corresponding execution functions according to the timeline and trigger conditions.

The scene execution component includes but not limited to various output devices of the vehicle, such as a seat module, an air conditioner vent module, a window module, a door module, a steering wheel module, an exterior light module, a massage module, an interior light module, a dash board, a central control screen, a copilot screen, a HUD (Head Up Display), an air conditioner module, a fragrance module, etc. In other words, the scene execution component on the in-vehicle infotainment side is an executive body which realizes the scene on the in-vehicle infotainment side, and a 5D scene with various senses such as hearing, sight, touch, smell, etc. may be achieved on the in-vehicle infotainment side by triggering multiple scene execution components.

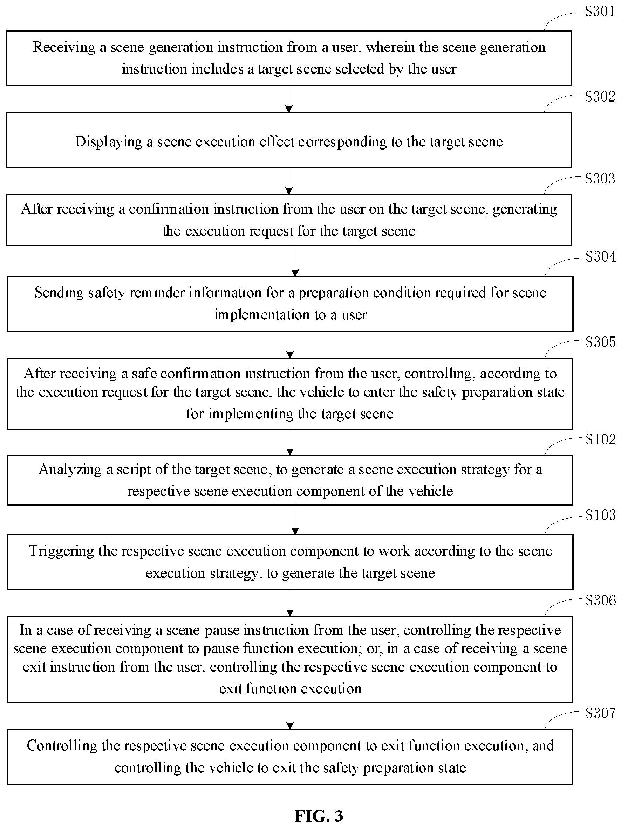

In an implementation, as shown in FIG. 3, prior to step S101, the method further includes following steps.

At step S301, receiving a scene generation instruction from a user, wherein the scene generation instruction includes the target scene selected by the user.

At step S302, displaying a scene execution effect corresponding to the target scene.

At step S303, after receiving a confirmation instruction from the user on the target scene, generating the execution request for the target scene.

The way of the user sending the scene generation instruction includes, but not limited to interface operation, voice mode, etc. of the terminal APP or the in-vehicle scene APP on the in-vehicle infotainment side. Specifically, the user may perform a corresponding interface operation via the interface of the in-vehicle scene APP, thereby actively sending the scene generation instruction by the way of interface operation. The user may issue a voice instruction to a microphone on the in-vehicle infotainment side, thereby actively sending the scene generation instruction for the target scene. The user may issue the scene generation instruction for the target scene via the terminal APP, and trigger the target scene via the network communication between the terminal APP and the in-vehicle scene APP.

In other words, in the embodiments of the present application, the selection and enablement of the target scene may be realized not only by the in-vehicle scene APP on the in-vehicle infotainment side, but also by the terminal APPs, such as a mobile phone APP, a personal computer APP, a tablet personal computer APP, etc. The terminal APP and the in-vehicle scene APP (such as an audiovisual domain controller for installing the in-vehicle scene APP) are connected by wide area network, and on the basis of satisfying user identity verification, the possibility of vehicle control and multi-scene external triggering of the vehicle may be realized, and the range of use is increased.

The scene execution effect corresponding to the target scene may be displayed on the in-vehicle infotainment side, which causes the user to preview the scene execution effect dynamically. In addition, a confirmation button for the target scene is shown, for example, a display window and a selection button are provided. After receiving the user's confirmation instruction on the target scene, the execution request for the target scene is generated, and go to step S101.

In an example, as shown in FIG. 2, the in-vehicle scene APP provides a dynamic preview for the scene execution effect of the target scene and gives a window to provide a selection button.

In an implementation, as shown in FIG. 3, the step S101 includes: step S304, sending safety reminder information for a preparation condition required for scene implementation to a user; step S305, after receiving a safety confirmation instruction from the user, controlling, according to the execution request for the target scene, the vehicle to enter the safety preparation state for implementing the target scene.

In an example, as shown in FIG. 2, after the user confirms to implement the target scene via the selection button, the interface of the in-vehicle scene APP prompts preparation conditions through a pop-up window: 1. EPB execution; 2. enter P position currently; 3. make sure the suspension can be adjusted to the specified height. At the same time, a safety confirmation prompt is given in the pop-up window. The user performs an operation on the vehicle according to the safety reminder information for the preparation conditions, and performs the safety confirmation operation after confirming that the vehicle satisfies each preparation condition.

In an implementation, as shown in FIG. 3, after step S103, the method further includes: step S306, in a case of receiving a scene pause instruction from the user, controlling the respective scene execution component to pause function execution; or, in a case of receiving a scene exit instruction from the user, controlling the respective scene execution component to exit function execution.

In other words, in the process of realizing the target scene, the user may trigger a scene pause instruction or a scene exit instruction via the in-vehicle scene APP, thereby causing the vehicle to pause or exit the target scene.

In an implementation, as shown in FIG. 3, after step S103, the method further includes: step S307, controlling the respective scene execution component to exit function execution, and controlling the vehicle to exit the safety preparation state.

In an example, controlling the vehicle to exit the safety preparation state may include: canceling the parking function of EPB; and/or controlling the suspension to return to a regular height; and/or canceling the setting that the gear position of the vehicle is the park position; and/or canceling the function that the vehicle is in a state of not being power off.

In other words, after the target scene is implemented, an original setting of the vehicle may be restored, thereby making the vehicle in a normal and convenient driving state.

In an implementation, the step S 101 may include: sending a safety control request to an audiovisual domain controller, to cause the audiovisual domain controller to generate a corresponding safety service request according to the safety control request, convert the safety service request into a first SOA gateway signal, and send the first SOA gateway signal to a corresponding safety domain controller; wherein the safety control request is configured for requesting the vehicle to enter the safety preparation state for implementing the target scene; the first SOA gateway signal is configured for causing the safety domain controller to convert it into a safety control instruction and send the safety control instruction to a corresponding safety execution component, to control the respective safety execution component to enter a corresponding safety preparation state.

In an example, continue to refer to FIG. 2, after the user performs the safety confirmation, the in-vehicle scene APP will enter a generation mode for the target scene.

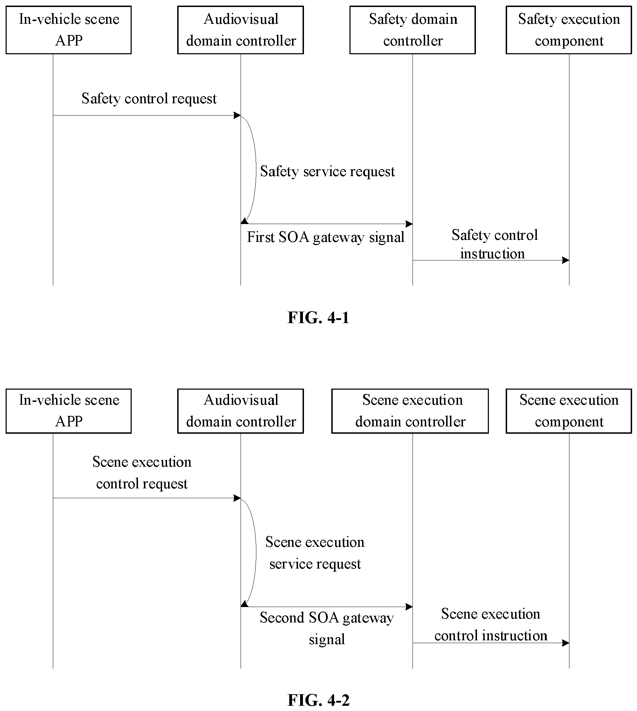

Specifically, as shown in FIG. 4-1, the in-vehicle scene APP sends the safety control request to the audiovisual domain controller, the safety control request is configured for requesting the vehicle to enter the safety preparation state for implementing the target scene. The audiovisual domain controller receives the safety control request and generates the corresponding safety service request according to the safety control request, and converts the safety service request into the first SOA gateway signal, and sends the first SOA gateway signal to the corresponding safety domain controller. The safety domain controller receives the first SOA gateway signal, and generates, according to the first SOA gateway signal, a safety control instruction for each safety execution component, and sends each safety control instruction to the corresponding safety execution component, to control the respective safety execution component to enter a corresponding safety preparation state.

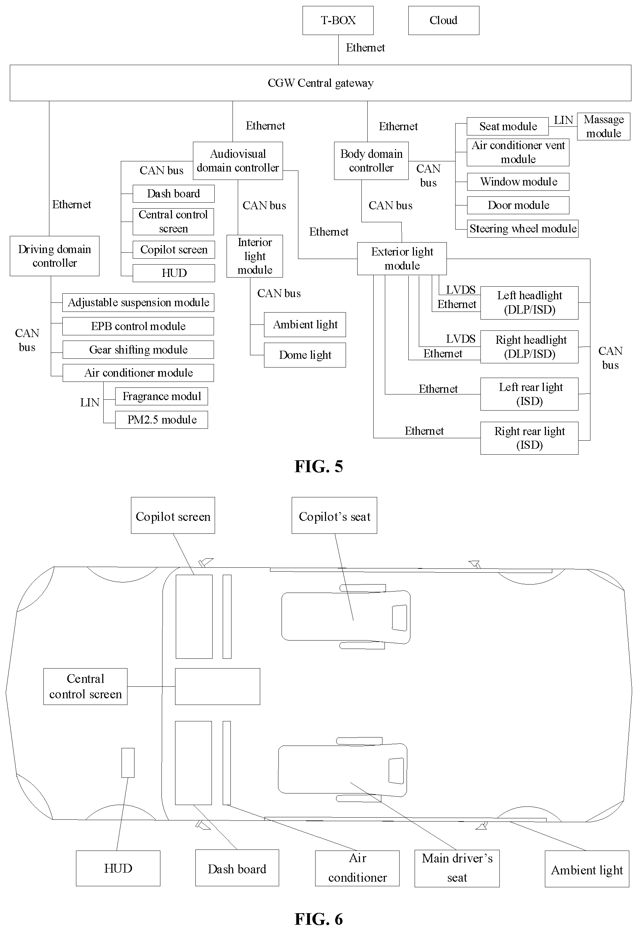

In an implementation, as shown in FIG. 5, the safety domain controller may be a driving domain controller of the vehicle, and the safety execution component may include any one of the following: an adjustable suspension module, a EPB control module, a gear shifting module and a power supply module. Each safety execution component is connected to the driving domain controller by a CAN (Controller Area Network) bus.

When the power supply module is in low voltage, the safety domain controller includes a vehicle domain controller, and the low voltage power supply module is controlled by the vehicle domain controller. When the power supply module is in high voltage, the safety domain controller includes a driving domain controller, and the high voltage power supply module is connected to the driving domain controller by the CAN bus and then controlled by the driving domain controller.

In an example, as shown in FIG. 2, based on the safety control instruction, the safety domain controller controls the EPB control module to cause the EPB to execute the parking function; and/or controls the adjustable suspension module to cause the suspension to lift to the preset height; and/or controls the gear shifting module to cause the gear position of the vehicle to be the park position, and the gear position of the vehicle is in the non-switchable state; and/or controls the power supply module of the vehicle to cause the vehicle to be in a state of not being power off, thereby causing the vehicle to enter the safety preparation state for implementing the target scene.

In an implementation, the step S 103 may include: sending, according to the scene execution strategy, a scene execution control request to the audiovisual domain controller, to cause the audiovisual domain controller to generate a corresponding scene execution service request according to the scene execution control request, convert the scene execution service request into a second SOA gateway signal, and send the second SOA gateway signal to a corresponding scene execution domain controller; wherein the second SOA gateway signal is configured for causing the scene execution domain controller to convert it into a function execution control instruction and send the function execution control instruction to the corresponding scene execution component, to control the respective scene execution component to work according to the scene execution strategy.

In an example, continue to refer to FIG. 2, after confirming that the vehicle has satisfied the preparation conditions required for implementing the target scene and entered the safety preparation state, the in-vehicle scene APP may operate to implement the target scene.

Specifically, as shown in FIG. 4-2, the in-vehicle scene APP sends the scene execution control request to the audiovisual domain controller, and the scene execution control request includes the scene execution strategy, that is, the execution function and execution time information of each scene execution component. The audiovisual domain controller receives the scene execution request, and determines, according to the scene execution component included in the scene execution strategy, the corresponding one or more scene execution domain controllers. The audiovisual domain controller generates, according to the scene execution request, the scene execution service request, converts the scene execution service request into the second SOA gateway signal, and sends the second SOA gateway signal to the corresponding scene execution domain controller. The scene execution domain controller generates the scene execution control instruction for each scene execution component according to the second SOA gateway signal, and sends each scene execution control instruction to the corresponding scene execution component respectively, to control the respective scene execution component to work according to the scene execution strategy so that the vehicle can realize the target scene.

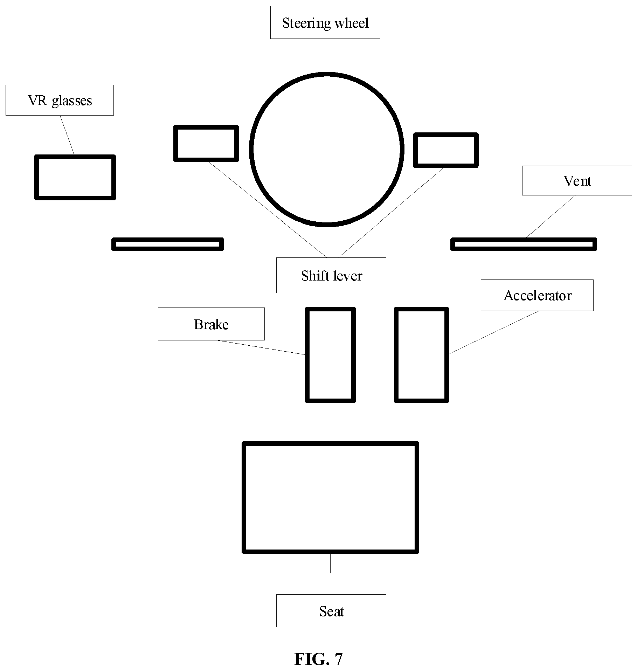

In an implementation, as shown in FIG. 5, FIG. 6, and FIG. 7, the scene execution domain controller includes a vehicle domain controller. Correspondingly, the scene execution component includes the at least one of the following: a seat module, an air conditioner vent module, a window module, a door module, a steering wheel module, an exterior light module. The seat module, the air conditioner vent module, the window module, the door module, the steering wheel module and the exterior light module are connected to the vehicle domain controller via the CAN bus. The seat module may be communicatively connected to a massage module via LIN (Local Interconnect Network), and then the massage module is controlled to drive the seat module to realize the seat massage function.

The scene execution domain controller may further include the audiovisual domain controller. Correspondingly, the scene execution component includes at least one of the following: an interior light module, a dash board, a central control screen, a copilot screen, a HUD. The interior light module is connected to the audiovisual domain controller via the CAN bus. The dash board, the central control screen, the copilot screen and the HUD are connected to the audiovisual domain controller via LVDS wire.

The scene execution domain controller may further include the driving domain controller. Correspondingly, the scene execution component includes the air conditioner module. The air conditioner module is connected to the driving domain controller via the CAN bus, and the air conditioner module may be communicatively connected to the fragrance module via LIN, thereby controlling the fragrance module to release corresponding fragrance via the air conditioner module.

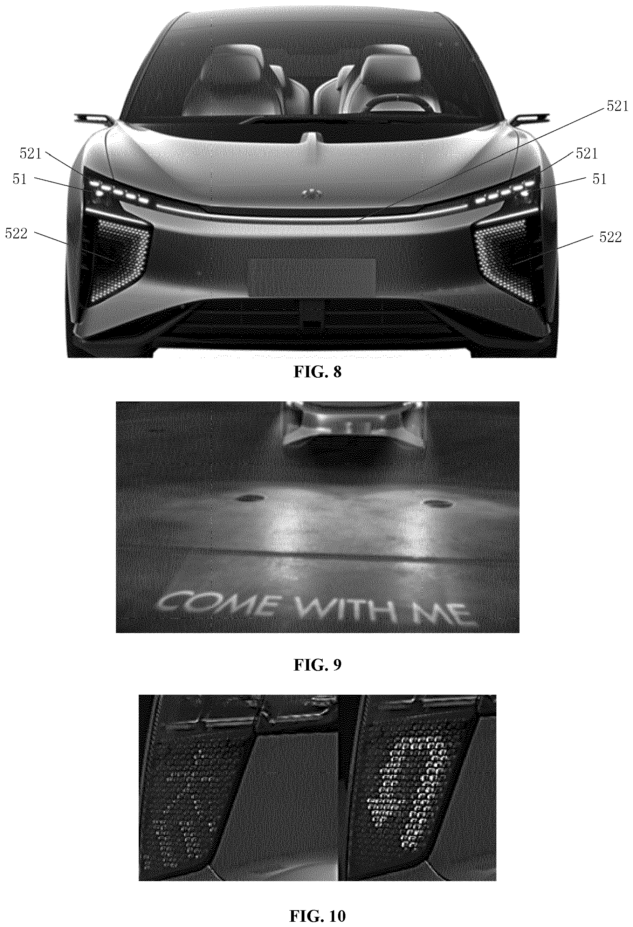

Further, the exterior light module may control multiple exterior lights. In an example, as shown in FIG. 8, the exterior light includes a DLP (Digital Light Processing) projection light 51 and an ISD (Interactive signal display) light 52. For example, the exterior light may be configured as a left headlight (the DLP projection light 51 and the ISD light 52), a right headlight (the DLP projection light 51 and the ISD light 52), a left rear light (the ISD light 52) and a right rear light (the ISD light 52).

The DLP projection light 51 may be used for conventional high and low beam, and may also be used for projecting projection data such as videos and photos. FIG. 9 illustrates an exemplary diagram of a projection effect of the DLP projection light 51. There are four sets of head and rear ISD lights 52 in total, and each set of ISD lights 52 includes a convention light 521 (such as a daytime running light, a position light, a turn signal light, a brake light, a backup light, a logo light, a head and rear through light), and an ISD screen 522 below the convention light 521. A corresponding lighting effect is realized by the dynamic display of the convention light 521. The ISD screen 522 may be a matrix screen formed by multiple LED (Light Emitting Diode) lights, and may be used for displaying photos, animations, etc. FIG. 10 illustrates the display effect of the ISD screen 522.

As shown in FIG. 5, the DLP projection light is communicatively connected to the exterior light module via the LVDS wire, to receive projection data such as videos and photos, etc. from the exterior light module. The ISD light is communicatively connected to the exterior light module via ethernet, to receive display data such as photos, animations, etc. from the exterior light module. The DLP projection light and the ISD light are respectively communicatively connected to the exterior light module via the CAN bus, to receive an exterior light control command from the exterior light module.

As shown in FIG. 5, the interior light module may control multiple interior lights, and the interior light may be an ambient light and a dome light set inside the vehicle. The interior light is communicatively connected to the interior light module via the CAN bus, to receive an interior light control command from the interior light module.

In an example, when the target scene selected by the user through the in-vehicle scene APP is a scene of resting on a beach, the step S 103 may include: the in-vehicle scene APP sends a scene execution control request to the audiovisual domain controller, and the scene execution control request includes the scene execution strategy for the scene of resting on a beach. The audiovisual domain controller receives the scene execution control request, generates a scene execution service request, and determines that the scene execution domain controllers corresponding to the scene of resting on the beach are the audiovisual domain controller, the vehicle domain controller and the driving domain controller.

The audiovisual domain controller may directly generate a scene execution control instruction and send it to the dash board, the central control screen and the copilot screen. The scene execution control instruction further includes multimedia resources of ocean, beach and seabird images, thereby triggering the dash board, the central control screen and the copilot screen to play the images of ocean, beach and seabird. The audiovisual domain controller may directly generate the interior light scene execution control instruction and send it to the ambient light, to trigger the ambient light to adjust to yellow of beach.

The audiovisual domain controller converts the scene execution service request into a second SOA gateway signal, and sends the second SOA gateway signal to the vehicle domain controller and driving domain controller. The vehicle domain controller generates, according to the second SOA gateway signal, multiple scene execution control instructions, and respectively send them to the seat module and the air conditioner vent module, thereby triggering the main driver's seat and the copilot's seat to adjust to a comfortable lying position, triggering a heating module to heat the main driver's seat and the copilot's seat to a higher temperature, and triggering the massage module to start seat massage; and triggering the air conditioner vent module to adjust the vent according to time and gradually change the air volume according to time. The driving domain controller generates, according to the second SOA gateway signal, a scene execution control instruction, and sends it to the air conditioner module, to trigger the air conditioner to adjust to a coastal climate temperature, and trigger the fragrance module to release the fragrance smelling like the sea.

In another example, when the target scene selected by the user through the in-vehicle scene APP is a forest scene, the step S103 may include: the in-vehicle scene APP sends a scene execution control request to the audiovisual domain controller, and the scene execution control request includes the scene execution strategy for the forest scene. The audiovisual domain controller receives the scene execution control request, generates a scene execution service request, and determines that the scene execution domain controllers corresponding to the forest scene are the audiovisual domain controller, the vehicle domain controller and the driving domain controller.

The audiovisual domain controller may directly generate a scene execution control instruction and send it to the dash board, the central control screen and the copilot screen. The scene execution control instruction further includes multimedia resources of forest and jungle animals images, thereby triggering the dash board, the central control screen and the copilot screen to display the images of forest and jungle animals. The audiovisual domain controller may directly generate an interior light scene execution control instruction and send it to the ambient light, to trigger the ambient light to adjust to green of forest.

The audiovisual domain controller converts the scene execution service request into a second SOA gateway signal, and sends the second SOA gateway signal to the vehicle domain controller and driving domain controller. The vehicle domain controller generates, according to the second SOA gateway signal, multiple scene execution control instructions, and respectively sends them to the seat module and the air conditioner vent module, thereby triggering the massage module to start the seat massage of the main driver's seat and copilot's seat; and triggering the air conditioner vent module to adjust the vent according to time and gradually change the air volume according to time. The driving domain controller generates, according to the second SOA gateway signal, a scene execution control instruction, and sends it to the air conditioner module, to trigger the air conditioner to adjust to a temperature that matches a forest environment; trigger the fragrance module to release the fragrance smelling like the forest; and trigger an air humidifier to start.

In another example, when the target scene selected by the user through the in-vehicle scene APP is a vehicle show scene, the step S103 may include: the in-vehicle scene APP sends a scene execution control request to the audiovisual domain controller, and the scene execution control request includes the scene execution strategy for the vehicle show scene. The audiovisual domain controller receives the scene execution control request, generates a scene execution service request, and determines that the scene execution domain controllers corresponding to the vehicle show scene are the audiovisual domain controller and the vehicle domain controller.

The audiovisual domain controller converts the scene execution service request into a second SOA gateway signal, and sends the second SOA gateway signal to the vehicle domain controller. The vehicle domain controller generates, according to the second SOA gateway signal, multiple scene execution control instructions, and respectively sends them to the door module, thereby controlling the door module to trigger the front and rear doors to open sequentially, and trigger a NT door to flap up and down, and trigger a rearview mirror to fold, and trigger the ambient light on the side door to change color and flash, and trigger a courtesy light on the side door to project a welcome pattern. In addition, when the logo light on the NT door is at the highest point, the logo light is triggered to project a corresponding logo. Further, the vehicle domain controller generates, according to the second SOA gateway signal, a scene execution control instruction, and sends it to the exterior light module. The audiovisual domain controller sends the display content of the ISD light and the display content of the DLP projection light to the exterior light module, thereby triggering the ISD light and the DLP projection light to demonstrate dynamic photos and projections respectively. The exterior light module may also trigger the position light, fog light and brake light on the rear to flash according to a preset logic. The audiovisual domain controller may directly generate the scene execution control instruction, and send it to multiple screens, such as the central control screen, the copilot screen, a rear screen, etc. The scene execution control instruction further includes multimedia resources, thereby triggering multiple screens such as the central control screen, the copilot screen, the rear screen, etc. to interactively play the multimedia resources so that an animation demonstration for the multi-screen interaction is realized. The audiovisual domain controller may directly generate an interior light scene execution control instruction and send it to the ambient light inside the vehicle, to trigger the ambient light to change color and flash according to the preset logic. In addition, the scene execution strategy for the vehicle show scene may further include time information of the scene execution component so that part or all of the foregoing scene execution components may be triggered to operate according to a preset timeline.

In another exemplary application, as shown in FIG. 6, when the target scene selected by the user through the in-vehicle scene APP is a racing scene, the respective scene execution component corresponding to the scene execution strategy includes: a steering wheel module, a pair of VR (Virtual Reality) glasses, an air conditioner vent module, a shift lever, a brake, an accelerator, a seat module. The step S103 may include: the in-vehicle scene APP sends a scene execution control request to the audiovisual domain controller, and the scene execution control request includes the scene execution strategy for the racing scene. The audiovisual domain controller receives the scene execution control request, generates a scene execution service request, and converts the scene execution service request into a second SOA gateway signal, and sends the second SOA gateway signal to a scene execution domain controller corresponding to the foregoing scene execution components. The corresponding scene execution domain controller generates multiple scene execution control instructions and send them to foregoing scene execution components, thereby triggering the pair of wearable VR glasses to connect the wifi of the vehicle; triggering the steering wheel to control the steering wheel of a game vehicle; triggering the shift lever to control the gear shifting of the game vehicle; triggering the accelerator to control the acceleration of the game vehicle; triggering the brake to control the deceleration of the game vehicle; triggering the air conditioner vent module to provide sporty feeling; triggering the seat module to provide back-pressing feeling; triggering the steering wheel to vibrate to provide crash feedback; triggering the seat to vibrate to provide rollover feedback; triggering the air suspension to provide dedicated feedback, etc..

Further, as shown in FIG. 5, the scene generation system of an embodiment of the present application may include a telematics BOX (T-BOX), to download a script of a scene from the TSP cloud library, and send the script to the audiovisual domain controller. The in-vehicle scene APP is installed on the audiovisual domain controller.

In an example, the audiovisual domain controller may include an upper layer controller and a lower layer controller, such as MPU (Microprocessor Unit) and MCU (Microcontroller Unit). The MCU may guarantee the stability and safety, and an APP is installed in an Android system based on the MPU hardware, and the system may access, preview and download real-time updated scene services at the cloud through wifi or a mobile network of the T-BOX. By using the Android system, the cost of network development may be reduced due to the generality of this system.

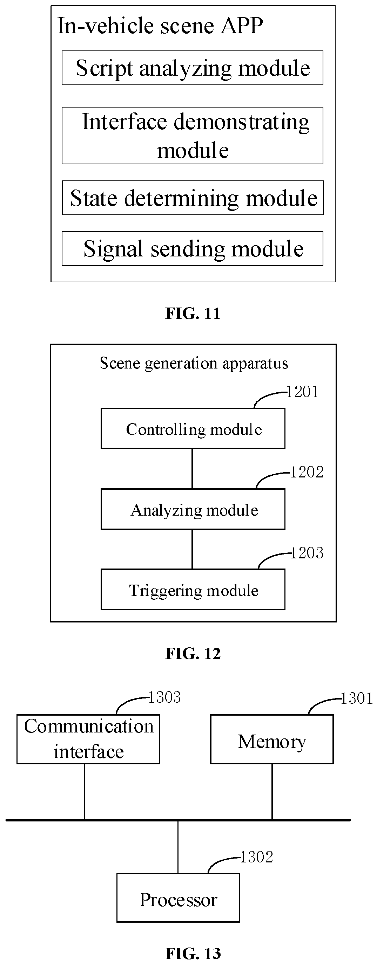

As shown in FIG. 11, the in-vehicle scene APP includes a script analyzing module, an interface demonstrating module, a state determining module and a signal sending module.

The script analyzing module is configured for analyzing a script of a target scene, to generate a scene execution strategy for a respective scene execution component, which includes an execution function for the respective scene execution component combined by timeline and trigger conditions. The interface demonstrating module is configured for dynamically displaying the scene execution effect of the target scene selected by the user. The state determining module is configured for determining whether the vehicle has entered a safety preparation state for implementing the target scene, that is the vehicle is in the safety state which can realize the target scene. The state determining module may send a safety control request to an audiovisual domain controller, to control and confirm the vehicle has entered the safety preparation state for the target scene. The signal sending module is configured for sending a scene execution request to the audiovisual domain controller after determining that the vehicle has entered the safety preparation state, and then controlling each scene execution component to work according to the scene execution strategy, to realize the target scene.

The foregoing module and architecture are merely an example of realizing the scene generation method of the embodiments of the present application, and are not limiting. The skilled in the art may adjust and set as needed.

An embodiment of the present application further provides a scene generation method which may be applied to an audiovisual domain controller, and the method includes: receiving a safety control request sent by an in-vehicle scene APP, wherein the safety control request is configured for requesting a vehicle to enter a safety preparation state for implementing the target scene; generating, according to the safety control request, a corresponding safety service request; and converting the safety service request into a first SOA gateway signal, and sending the first SOA gateway signal to a corresponding safety domain controller, wherein the first SOA gateway signal is configured for causing the safety domain controller to convert it into a safety control instruction and send the safety control instruction to a corresponding safety execution component, to control the respective safety execution component to enter a corresponding safety preparation state.

In an implementation, the method further includes: receiving a scene execution control request that is sent by the in-vehicle scene APP according to a scene execution strategy, wherein the scene execution strategy includes an execution function and execution time information of a respective scene execution component; generating, according to the scene execution control request, a corresponding scene execution service request; converting the scene execution service request into a second SOA gateway signal, and sending the second SOA gateway signal to a corresponding scene execution domain controller; wherein the second SOA gateway signal is configured for causing the scene execution domain controller to convert it into a function execution control instruction and send the function execution control instruction to a corresponding scene execution component, to control the respective scene execution component to work according to the scene execution strategy.

An embodiment of the present application further provides a scene generation method which may be applied to a safety domain controller, and the method includes: receiving a first SOA gateway signal sent by an audiovisual domain controller; converting the first SOA gateway signal into a corresponding safety control instruction; and sending each safety control instruction to a corresponding safety execution component, to control the respective safety execution component to enter a corresponding safety preparation state.

In an implementation, controlling the respective safety execution component to enter the corresponding safety preparation state includes: controlling an electrical park brake system control module to execute a parking function; and/or controlling an adjustable suspension module to cause a suspension to lift to a preset height; and/or controlling a gear shifting module to cause a gear position of a vehicle to be a park position, and to cause the gear position of the vehicle to be in a non-switchable state; and/or controlling a power supply module of the vehicle to cause the vehicle to be in a state of not being power off.

The foregoing scene generation method for the audiovisual domain controller and the safety domain controller may refer to the relevant description of the foregoing scene generation method for the in-vehicle scene APP, which is not elaborated herein.

FIG. 12 illustrates a structural block diagram of a scene generation apparatus according to an embodiment of the present application. As shown in FIG. 12, the apparatus may include:
a controlling module 1201, which is configured for controlling, according to an execution request for a target scene, a vehicle to enter a safety preparation state for implementing the target scene;
an analyzing module 1202, which is configured for analyzing a script of the target scene, to generate a scene execution strategy for a respective scene execution component of the vehicle, wherein the scene execution strategy includes an execution function and execution time information of the respective scene execution component; and
a triggering module 1203, which is configured for triggering the respective scene execution component to work according to the scene execution strategy, to generate the target scene.

In an implementation, the controlling module 1201 includes:
a receiving unit, which is configured for receiving a scene generation instruction from a user, wherein the scene generation instruction includes the target scene selected by the user;
a displaying unit, which is configured for displaying a scene execution effect corresponding to the target scene; and
a generating unit, which is configured for generating the execution request for the target scene after receiving a confirmation instruction from the user on the target scene.

In an implementation, the controlling module 1201 includes:
a sending unit, which is configured for sending safety reminder information for a preparation condition required for scene implementation to a user, to cause the user to operate the vehicle according to the preparation condition; and
a controlling unit, which is configured for controlling, according to the execution request for the target scene, the vehicle to enter the safety preparation state for implementing the target scene, after receiving a safety confirmation instruction from the user.

In an implementation, the controlling module 1201 is also configured for sending a safety control request to an audiovisual domain controller, to cause the audiovisual domain controller to generate a corresponding safety service request according to the safety control request, convert the safety service request into a first SOA gateway signal, and send the first SOA gateway signal to a corresponding safety domain controller; wherein the safety control request is configured for requesting the vehicle to enter the safety preparation state for implementing the target scene; and the first SOA gateway signal is configured for causing the safety domain controller to convert it into a safety control instruction and send the safety control instruction to a corresponding safety execution component, to control the respective safety execution component to enter a corresponding safety preparation state.

In an implementation, the apparatus is also configured for, after triggering the respective scene execution component to work according to the scene execution strategy to generate the target scene: in a case of receiving a scene pause instruction from the user, controlling the respective scene execution component to pause function execution; or in a case of receiving a scene exit instruction from the user, controlling the respective scene execution component to exit function execution.

In an implementation, the triggering module 1203 is also configured for sending, according to the scene execution strategy, a scene execution control request to the audiovisual domain controller, to cause the audiovisual domain controller to generate a corresponding scene execution service request according to the scene execution control request, convert the scene execution service request into a second SOA gateway signal, and send the second SOA gateway signal to a corresponding scene execution domain controller; wherein the second SOA gateway signal is configured for causing the scene execution domain controller to convert it into a function execution control instruction and send the function execution control instruction to a corresponding scene execution component, to control the respective scene execution component to work according to the scene execution strategy.

Functions of the modules in the apparatuses of the embodiment of the present application may refer to corresponding depictions of the above methods. Detailed depictions will not be elaborated.

FIG. 13 illustrates a structural block diagram of a scene generation device according to an embodiment of the present application. As shown in FIG. 13, the device includes: a memory 1301 and a processor 1302, wherein instructions that can be executed by the processor 1302 are stored in the memory 1301. When the processor 1302 executes the instructions, any one of the methods in the foregoing embodiments is implemented. The number of the memory 1301 and the processor 1302 may be one or more. The terminal or server is intended to represent various forms of digital computers, such as laptop computers, desktop computers, workstations, personal digital assistants, servers, blade servers, mainframe computers, and other suitable computers. The terminal or server may also represent various forms of mobile devices, such as personal digital processors, cellular phones, smart phones, wearable devices, and other similar computing devices. The components shown herein, their connections and relationships, and their functions are by way of example only, and are not intended to limit implementations of the present application described and/or claimed herein.

The device may further includes a communication interface 1303 for communicating with external devices and performing data interactive transmission. The devices are interconnected using different buses and can be mounted on a common mainboard or mounted in other manners as desired. The processor 1302 may process instructions executed within the terminal or server, the instructions including instructions stored in or on the memory and configured to display graphical information of the GUI on external input/output devices, such as a display device coupled to an interface. In other implementations, multiple processors and/or multiple buses may be used together with multiple memories, if necessary. Likewise, multiple terminals or servers may be connected, with each device providing partial necessary operations, e.g., severing as an array of servers, a group of blade servers, or a multiprocessor system. The buses may be classified into address bus, data bus, control bus and so on. For ease of presentation, the bus is represented only with one thick line in FIG. 13, but this does not mean that there is only one bus or one type of bus.

Optionally, in a specific implementation, if the memory 1301, the processor 1302 and the communication interface 1303 are integrated on one chip, the memory 1301, the processor 1302 and the communication interface 1303 may accomplish intercommunication through an internal interface.

It should be appreciated that the foregoing processor may be a Central Processing Unit (CPU), and may also be other general-purpose processors, Digital Signal Processers (DSPs), Application Specific Integrated Circuits (ASICs), Field Programmable Gate Arrays (FPGAs) or other programmable logic devices, discrete gates or transistor logic devices, discrete hardware components, and the like. The general-purpose processor may be a microprocessor or any conventional processor or the like. It should be appreciated that the processor may be a processor supporting an Advanced RISC Machines (ARM) architecture.

An embodiment of the present application provides a computer-readable storage medium (such as the above-mentioned memory 1301), which stores computer instructions which, when executed by a processor, implement the methods provided in the embodiments of the present application.

Optionally, the memory 1301 may include a program-storing region and a data-storing region, wherein the program-storing region may store an operating system, and an application needed by at least one function; the data-storing region may store data created according to the use of the terminal or server. In addition, the memory 1301 may include high-speed random access memory, and may also include a non-transitory memory, such as at least one magnetic disk storage device, a flash memory device, or other non-transitory solid-state storage devices. In some embodiments, the memory 1301 may optionally include a memory located remotely relative to the processor 1302, and these remote memories may be connected to the terminal or server through a network. Examples of the network include, but are not limited to, the Internet, an intranet, a local area network, a mobile communication network, and combinations thereof.

In the depictions of the description, depictions referring to terms "one embodiment", "some embodiments", "an example", "a specific example" or "some examples" mean that specific features, structures, materials or characteristics described in combination with the embodiment or example are included in at least one embodiment or example of the present application. Furthermore, the features, structures, materials or characteristics described may be combined in any suitable manner in any one or more embodiments or examples. Furthermore, those skilled in the art may incorporate and combine the different embodiments or examples described in this description, as well as the features of the different embodiments or examples, without conflicting one another.

In addition, terms "first" and "second" are used for the purpose of description only, and are not to be understood as indicating or implying relative importance or implicitly indicating the number of technical features indicated. Thus, the features defined by "first" or "second" may explicitly or implicitly include one or more of the features. In the description of the present application, "multiple" means two or more, unless specifically defined otherwise.

Any description of a process or method in a flowchart or otherwise described herein may be understood to represent that one or more (two or more) modules, segments or portions having code of executable instructions for implementing specific logic functions or steps of the process are included. Furthermore, the scope of the preferred embodiments of the present application includes alternative implementations in which the functions may be performed out of the order shown or discussed, including performing the functions substantially concurrently or in the reverse order depending upon the functions involved.

The logic and/or steps represented in flowcharts or otherwise described herein, for example, may be considered as an ordered listing of executable instructions for implementing the logical functions, and may be embodied in any computer-readable medium for use by an instruction execution system, apparatus, or device (for example, a computer-based system, a system including a processor, or other system that can fetch instructions from the instruction execution system, apparatus or device and execute the instructions), or may be used in conjunction with the instruction execution system, apparatus or device.

It should be understood that various parts of the present application may be implemented with hardware, software, firmware, or combinations thereof. In the embodiments described above, various steps or methods may be implemented with software or firmware stored in the memory and executed by a suitable instruction execution system. All or part of the steps of the method in the above-mentioned embodiments may be completed by relevant hardware instructed by a program, and the program may be stored in a computer-readable storage medium. When the program is executed, it includes one of or combinations of the steps of the method embodiments.

In addition, functional units in each embodiment of the present application may be integrated into one processing module, or each unit may exist physically alone, or two or more units may be integrated into one module. The above-mentioned integrated modules may be implemented in the form of either hardware or a software function module. If the integrated module is implemented in the form of the software functional module and sold or used as an independent product, it may also be stored in a computer-readable storage medium. The storage medium may be a read-only memory, a magnetic disk, an optical disk, or the like.

What are described above are only specific implementations of the present application, but the protection scope of the present application is not limited to this. Any person skilled in the art may easily think of variations or substitutions within the scope of the technology disclosed in the present application, which shall be covered by the protection scope of the present application. Therefore, the protection scope of the present application should be subject to the protection scope of the claims.

## Claims

1. A scene generation method, applied to an in-vehicle scene APP, the method comprising:
controlling, according to an execution request for a target scene, a vehicle to enter a safety preparation state for implementing the target scene;
analyzing a script of the target scene, to generate a scene execution strategy for a respective scene execution component of the vehicle, wherein the scene execution strategy comprises an execution function and execution time information of the respective scene execution component; and
triggering the respective scene execution component to work according to the scene execution strategy, to generate the target scene.

2. The method according to claim 1, wherein prior to the controlling, according to the execution request for the target scene, the vehicle to enter the safety preparation state for implementing the target scene, the method comprises:
receiving a scene generation instruction from a user, wherein the scene generation instruction comprises the target scene selected by the user;
displaying a scene execution effect corresponding to the target scene; and
after receiving a confirmation instruction from the user on the target scene, generating the execution request for the target scene.

3. The method according to claim 1, wherein the controlling, according to the execution request for the target scene, the vehicle to enter the safety preparation state for implementing the target scene, comprises:
sending safety reminder information for a preparation condition required for scene implementation to a user, to cause the user to operate the vehicle according to the preparation condition; and
after receiving a safety confirmation instruction from the user, controlling, according to the execution request for the target scene, the vehicle to enter the safety preparation state for implementing the target scene.

4. The method according to claim 1, wherein the controlling the vehicle to enter the safety preparation state for implementing the target scene, comprises:
sending a safety control request to an audiovisual domain controller, to cause the audiovisual domain controller to generate a corresponding safety service request according to the safety control request, convert the safety service request into a first SOA gateway signal, and send the first SOA gateway signal to a corresponding safety domain controller;
wherein the safety control request is configured for requesting the vehicle to enter the safety preparation state for implementing the target scene; and
the first SOA gateway signal is configured for causing the safety domain controller to convert the first SOA gateway signal into a safety control instruction and send the safety control instruction to a corresponding safety execution component, to control the respective safety execution component to enter a corresponding safety preparation state.

5. The method according to claim 1, wherein after the triggering the respective scene execution component to work according to the scene execution strategy to generate the target scene, the method further comprises:
in a case of receiving a scene pause instruction from the user, controlling the respective scene execution component to pause function execution; or
in a case of receiving a scene exit instruction from the user, controlling the respective scene execution component to exit function execution.

6. The method according to any one of claims 1-5, wherein the triggering the respective scene execution component to work according to the scene execution strategy, comprises:
sending, according to the scene execution strategy, a scene execution control request to an audiovisual domain controller, to cause the audiovisual domain controller to generate a corresponding scene execution service request according to the scene execution control request, convert the scene execution service request into a second SOA gateway signal, and send the second SOA gateway signal to a corresponding scene execution domain controller;
wherein the second SOA gateway signal is configured for causing the scene execution domain controller to convert the second SOA gateway signal into a function execution control instruction and send the function execution control instruction to a corresponding scene execution component, to control the respective scene execution component to work according to the scene execution strategy.

7. A scene generation method, applied to an audiovisual domain controller, the method comprising:
receiving a safety control request sent by an in-vehicle scene APP, wherein the safety control request is configured for requesting a vehicle to enter a safety preparation state for implementing a target scene;
generating a corresponding safety service request according to the safety control request; and
converting the safety service request into a first SOA gateway signal, and sending the first SOA gateway signal to a corresponding safety domain controller, wherein the first SOA gateway signal is configured for causing the safety domain controller to convert the first SOA gateway signal into a safety control instruction and send the safety control instruction to a corresponding safety execution component, to control the respective safety execution component to enter a corresponding safety preparation state.

8. The method according to claim 7, further comprising:
receiving a scene execution control request that is sent by the in-vehicle scene APP according to a scene execution strategy, wherein the scene execution strategy comprises an execution function and execution time information of a respective scene execution component;
generating a corresponding scene execution service request according to the scene execution control request; and
converting the scene execution service request into a second SOA gateway signal, and sending the second SOA gateway signal to a corresponding scene execution domain controller; the second SOA gateway signal is configured for causing the scene execution domain controller to convert the second SOA gateway signal into a function execution control instruction and send the function execution control instruction to a corresponding scene execution component, to control the respective scene execution component to work according to the scene execution strategy.

9. A scene generation method, applied to a safety domain controller, the method comprising:
receiving a first SOA gateway signal sent by an audiovisual domain controller;
converting the first SOA gateway signal into a corresponding safety control instruction; and
sending each safety control instruction to a corresponding safety execution component respectively, to control the respective safety execution component to enter a corresponding safety preparation state.

10. The method according to claim 9, wherein the controlling the respective safety execution component to enter the corresponding safety preparation state, comprises:
controlling an electrical park brake system control module to execute a parking function; and/or
controlling an adjustable suspension module to cause a suspension to lift to a preset height; and/or
controlling a gear shifting module to cause a gear position of a vehicle to be a park position, and to cause the gear position of the vehicle to be in a non-switchable state; and/or
controlling a power supply module of the vehicle to cause the vehicle to be in a state of not being power off.

11. A scene generation system, comprising:
an audiovisual domain controller, wherein an in-vehicle scene APP is installed on the audiovisual domain controller, and the in-vehicle scene APP is configured for performing the method according to any one of claims 1-6, and the audiovisual domain controller is configured for performing the method according to claim 7 or 8;
a safety domain controller, communicatively connected to the audiovisual domain controller, wherein the safety domain controller is configured for performing the method according to claim 9 or 10;
a safety execution component, communicatively connected to the safety domain controller, wherein the safety execution component is configured for entering a corresponding safety preparation state according to a safety control instruction of the safety domain controller;
a scene execution domain controller, communicatively connected to the audiovisual domain controller, wherein the scene execution domain controller is configured for converting a second SOA gateway signal sent by the audiovisual domain controller into a function execution control instruction, and sending the function execution control instruction to a corresponding scene execution component; and
the scene execution component, communicatively connected to the safety domain controller, wherein the scene execution component is configured for working according to the function execution control instruction of the safety domain controller.

12. The system according to claim 11, wherein the safety domain controller comprises a driving domain controller, and the safety execution component comprises at least one of the following: an adjustable suspension module, an electrical park brake system control module, a gear shifting module, and a power supply module; and the safety execution component is connected to the driving domain controller via a CAN bus.

13. The system according to claim 11, wherein the scene execution domain controller comprises a vehicle domain controller, and the scene execution component comprises at least one of the following: a seat module, an air conditioner vent module, a window module, a door module, a steering wheel module, and an exterior light module; and the scene execution component is connected to the vehicle domain controller via a CAN bus.

14. The system according to claim 11, wherein the scene execution domain controller comprises the audiovisual domain controller, and the scene execution component comprises an interior light module, and the scene execution component is connected to the audiovisual domain controller via a CAN bus.

15. The system according to claim 11, wherein the scene execution domain controller comprises the audiovisual domain controller, the scene execution component comprises at least one of the following: a dash board, a central control screen, a copilot screen, and a head up screen; and the scene execution component is connected to the audiovisual domain controller via a LVDS wire.

16. A scene generation apparatus, comprising:
a controlling module, which is configured for controlling, according to an execution request for a target scene, a vehicle to enter a safety preparation state for implementing the target scene;
an analyzing module, which is configured for analyzing a script of the target scene, to generate a scene execution strategy for a respective scene execution component of the vehicle, wherein the scene execution strategy comprises an execution function and execution time information of the respective scene execution component; and
a triggering module, which is configured for triggering the respective scene execution component to work according to the scene execution strategy, to generate the target scene.

17. The apparatus according to claim 16, further comprising:
a receiving module, which is configured for receiving a scene generation instruction from a user, prior to controlling, according to the execution request for the target scene, the vehicle to enter the safety preparation state for implementing the target scene, wherein the scene generation instruction comprises the target scene selected by the user;
a displaying module, which is configured for displaying a scene execution effect corresponding to the target scene; and
an execution request generating module, which is configured for generating the execution request for the target scene after receiving a confirmation instruction from the user on the target scene.

18. A scene generation device, comprising:
at least one processor; and
a memory communicatively connected to the at least one processor; wherein,
instructions enable to be executed by the at least one processor is stored in the memory, and the instructions, when executed by the at least one processor, enable the at least one processor to perform the scene generation method according to any one of claims 1- 10.

19. A computer-readable storage medium, wherein the computer-readable storage medium stores a computer program, and the computer program, when executed by a processor, implements the method according to any one of claims 1-10.
